# EUROPÄISCHE PATENTSCHRIFT

(11) **EP 3 976 993 B1**
(45) Veröffentlichungstag und Bekanntmachung des Hinweises auf die Patenterteilung: **28.02.2024**
(21) Anmeldenummer: 20729713.6
(22) Anmeldetag: 28.05.2020
(51) Int. Cl.: F16G 13/16

(54) **LEITUNGSFÜHRUNGSEINRICHTUNG FÜR REINRAUMANWENDUNGEN**
ENERGY CABLE GUIDE FOR CLEAN ROOM APPLICATION
CHAÎNE PORTE-CÂBLES POUR APPLCATION SALLE BLANCHE

(30) Priorität: 29.05.2019 DE 202019103068 U
(43) Veröffentlichungstag der Anmeldung: 06.04.2022
(73) Patentinhaber: Igus GmbH, 51147 Köln (DE)
(72) Erfinder: HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/EP2020/064894
(87) Internationale Veröffentlichungsnummer: WO 2020/239938

(56) Entgegenhaltungen:
- WO-A1-2014/147196
- WO-A1-2016/042134
- DE-A1-102007 008 647
- DE-C1- 4 015 803
- DE-U1- 7 615 945

## Beschreibung

### Die Erfindung betrifft allgemein eine

Leitungsführungseinrichtung für Reinraumanwendungen, die zum dynamischen und geschützten Führen von Versorgungsleitungen, wie z.B. Kabeln, Schläuchen oder dergleichen, in einer Reinraumanwendung gestaltet ist. Eine gattungsgemäße Leitungsführungseinrichtung umfasst eine längliche, flexible Umhüllung die hin- und hergehend zwischen einer ersten Anschlussstelle und einer dazu relativbeweglichen zweiten Anschlussstelle verfahrbar ist. Die Leitungsführungseinrichtung kann dabei typischen zwei Trume mit einem zwischenliegenden verfahrbaren Umlenkbogen mit vorgegebenem Minimalradius bilden und z.B. in einer vertikalen Ebene bzw. linear verfahren.

In Reinräumen eingesetzte Vorrichtungen sollen beim Betrieb möglichst wenig Partikel an die Umgebung abgeben, und dies betrifft besonders bewegliche Vorrichtungen. Hinsichtlich Leitungsführungseinrichtungen wurden bereits in WO 02/086349 A1 und als Weiterentwicklung hierzu in WO 2012/131033 A1 reinraumtaugliche Energieführungsketten als Leitungsführungseinrichtungen vorgeschlagen, welche abriebbedingtes Freisetzen von Partikeln durch die Energieführungskette minimieren.

Nebst der Leitungsführungseinrichtung, setzen jedoch - bedingt durch das bestimmungsgemäße Hin- und Herfahren - auch die geführten Leitungen selbst über die Betriebsdauer Partikel frei. Eine in dieser Hinsicht verbesserte Leitungsführungseinrichtung wurde von der Anmelderin in der gattungsgemäßen
WO 2016/042134 A1 vorgeschlagen. Die hierin (mit Bezug auf Abbildung 3A-3D bzw. 12-16 in WO 2016/042134 A1) beschriebene Leitungsführungseinrichtung ist unter der Handelsbezeichnung "e-skin" von der Anmelderin erhältlich. Diese gattungsgemäße Leitungsführungseinrichtung hat eine Umhüllung, aus gegenüberliegenden Schalenteilen, mit zwei gegenüberliegenden lösbaren und wiederverschließbaren Verbindungsbereichen, zum Einfügen bzw. Herausnehmen einer Leitung im geöffneten Zustand. Im geschlossenen Zustand umgibt die Umhüllung den innenliegenden Innenraum, der zum Aufnehmen einer oder mehrerer Leitungen dient, staubdicht. Somit können im Betrieb keine Partikel mit für Reinraumanwendungen kritischen Partikelgrößen austreten. Auch die Umhüllung selbst ist reinraumoptimiert gestaltet. Ein erheblicher Vorteil gegenüber anderen vorbekannten Lösungen besteht darin, dass die Leitungsführungseinrichtung geöffnet werden kann um bedarfsweise einzelne Leitungen zu erneuern, d.h. die Leitungsführungseinrichtung muss nicht mitsamt allen Leitungen komplett getauscht werden.

Wenn eine derartige oder vergleichbare Leitungsführungseinrichtung zu Wartungszwecken, z.B. zum Austausch einer defekten Leitung, geöffnet wird, können jedoch Partikel die über die vorangehende Betriebsdauer im Innenraum betriebsbedingt, insbesondere von den Leitungen, freigesetzt wurden in die Umgebung, d.h. in den Reinraum gelangen werden. Eine derartige Verunreinigung erfordert aufwendige Reinigungsmaßnahmen bzw. verlängert Stillstandzeiten und ist somit offensichtlich unerwünscht.

Eine erste Aufgabe der vorliegenden Erfindung liegt mithin darin, eine hinsichtlich des vorgenannten Verunreinigungsproblems verbesserte Leitungsführungseinrichtung vorzuschlagen. Diese Aufgabe löst eine Leitungsführungseinrichtung nach Anspruch 1. Vorteilhafte Weiterbildungen ergeben sich aus den Unteransprüchen.

Bei einer Leitungsführungseinrichtung nach dem Oberbegriff aus Anspruch 1 wird die Aufgabe bereits dadurch gelöst, dass innerhalb der Umhüllung ein Funktionsmaterial vorgesehen ist, das zum Reduzieren der Anzahl freier Partikel im Innenraum dient bzw. wirksam ist.

Die erfindungsgemäße erzielte Reduzierung ist dabei relativ zu verstehen und bezieht sich auf eine Vergleichsmessung nach gleicher Betriebsdauer an einer erfindungsgemäßen Leitungsführungseinrichtung und an einer zu dieser baugleichen Leitungsführungseinrichtung mit identischer Leitungsbefüllung, jedoch ohne Funktionsmaterial im Innenraum, jeweils durch Absaugen des Innenraums. Dabei kann insbesondere die Anzahl und Größe der Partikel pro Lufteinheit gemäß der Norm DIN EN ISO 14644-1 gemessen werden.

Die Reduzierung kann insbesondere durch zwei Wirkprinzipien erreicht werden, nämlich durch Verwendung eines Funktionsmaterials das betriebsbedingt im Innenraum freigesetzte Partikel sozusagen einfängt bzw. festhält oder eines Funktionsmaterials das dem betriebsbedingten Freisetzen von Partikeln im Innenraum, insbesondere durch zu führende Leitungen, entgegenwirkt. Ebenfalls im Rahmen der Erfindung liegt die Verwendung eines Funktionsmaterials das beide Wirkprinzipien erzielt oder aber einer Kombination von zwei Materialen mit jeweils einer dieser Wirkungen.

Das mindestens eine Funktionsmaterial kann dabei insbesondere separat bzw. zusätzlich zur eigentlichen Umhüllung und den aufzunehmenden Leitungen im Innenraum angeordnet bzw. angebracht sein.

Die Umhüllung (Engl. envelope) umgibt den Innenraum der Leitungsführungseinrichtung staubdicht, sowohl in Längsrichtung zwischen den beiden Enden, als auch in der Umfangsrichtung. Durch die staubdichte Umhüllung wird im geschlossenen Zustand effektiv das Austreten von Partikeln verhindert. Staubdicht bedeutet im vorliegenden Zusammenhang nicht zwingend hermetisch gasdicht bzw. so verschlossen, dass nichts eindringen oder austreten kann. Staubdicht bedeutet vielmehr technisch dicht gegen ein Austreten von Partikeln mit für Reinraumanwendungen kritischen Partikelgrößen, die z.B. bei herkömmlichen Lösungen durch Reibung, Abrieb oder Bewegung entstehen.

Im Rahmen der Erfindung liegen unterschiedliche Möglichkeiten das allgemein das partikelreduzierende Funktionsmaterial einzubringen. Es kann hierzu im Innenraum ein Einsatz (Engl. insert), eine Einlage (Engl. inlay), eine Schicht (Engl. layer), eine Füllung (Engl. filling), eine Polsterung (Engl. padding) oder dgl. vorgesehen werden, welcher bzw. welche das partikelreduzierende Funktionsmaterial umfasst oder materialeinheitlich aus diesem besteht.

Alternativ oder ergänzend kann auch an der Innenwand der Umhüllung zumindest abschnittsweise eine Beschichtung aus dem Funktionsmaterial vorgesehen werden.

In einer Ausführungsform ist wird Funktionseinlage in Form einer Faserstruktur, insbesondere eines Faservlieses, mit partikelanziehender Wirkung und/oder Haftwirkung vorgesehen. Dabei kann insbesondere eine Faserstruktur mit elektrostatischer Wirkung, vorzugweise mit Polymer-Fasern als Funktionsmaterial vorgesehen sein. Eine elektrostatische Ladung, die auf Partikel anziehend wirkt, kann dabei durch betriebsbedingte Relativbewegung des Vlieses bzw. der Faserstruktur zur Umhüllung und/oder geführten Leitungen erreicht bzw. aufrechterhalten werden. Geeignete Faservliese sind z.B. zu Reinigungszwecken bekannt. In Betracht kommen z.B. Mikrofasern aus Polyethylen und/oder aus Polyester. Die Faserstruktur kann mit einer Beschichtung, z.B. aus Haftklebestoff versehen sein, welche eine Dauerklebrigkeit aufweist und die Haftwirkung verstärkt, bzw. auch bei Abbau der elektrostatischen Ladung die Partikeln an den Fasern haften lässt.

Das Funktionsmaterial kann insbesondere einen Haftklebstoff umfassen, z.B. auf Basis von Natur- oder Synthesekautschuk oder Acrylaten, oder auch auf Basis von Polyurethanen und Silikonen. Ein geeigneter Haftklebstoff sollte über eine längere Betriebsdauer (und innerhalb der Anwendungstemperaturbereiche) über eine permanente Oberflächenklebrigkeit (Tack) verfügen.

In einer weiteren Ausführungsform ist kann als Funktionsmaterial ein Gel, ein geschlossenporiger Schaum und/oder ein Haftklebstoff, zumindest abschnittsweise in die Umhüllung eingebracht sein. Dabei kann das Funktionsmaterial insbesondere als hochviskose Funktionsfüllung oder Funktionsschicht eingebracht sein. Eine Füllung muss dabei den freibleibenden Innenraum (ohne Leitungen) im Querschnitt und/oder in Längsrichtung nicht vollständig ausfüllen.

Bevorzugt weist ein entsprechendes Funktionsmaterial, insbesondere ein Gel bzw. Schaum oder Haftklebstoff adhäsiver Wirkung bzw. Dauerklebrigkeit aufweist, zumindest bei bestimmungsgemäßen Umgebungs- bzw. Betriebsbedingungen, insbesondere bei Temperaturen im Bereich von 5°C-60°C, zumindest von 10°C bis 50°C.

Alternativ oder ergänzend kann eine Funktionsschicht mit partikelreduzierendem Funktionsmaterial lediglich bereichsweise, insbesondere an der Innenwand der Umhüllung angebracht sein. Bevorzugt wird als Funktionsmaterial ein von der Umhüllung und den Leitungen separates Material, d.h. keine stoffschlüssige Beschichtung der Umhüllungsinnenseite bzw. Leitungsaußenseite(n) eingesetzt.

Als Beispiel eines Funktionsmaterials das dem betriebsbedingten Freisetzen von Partikeln im Innenraum, insbesondere durch zu führende Leitungen, entgegenwirkt kann ergänzend oder alternativ ein reibwertminderndes Tribopolymer vorgesehen werden. Konstruktiv einfach kann diese als Funktionseinlage bzw. Gleitfolie vorgesehen werden, insbesondere zwischen benachbarten Leitungen, z.B. mittig auf der neutralen Faser oder auch außenseitig zwischen Leitungen und der Innenwand der Umhüllung.

Eine konstruktiv bzw. fertigungstechnisch einfache Lösung besteht darin mindestens einen langestreckten bandartigen Funktionseinsatz bzw. mindestens eine langestreckte bandartige Funktionseinlage im Innenraum anzuordnen. Hierbei kann eine bestehende Umhüllung, z.B. nach Abbildung 3A-3D bzw. 12 bis 16 aus WO 2016/042134 A1 ohne Veränderung, verwendet werden.

Ein geeignetes Funktionsmaterial kann zumindest über einen überwiegenden Anteil der Länge der Umhüllung im Innenraum vorgesehen sein, je nach Anordnung innerhalb des Aufnahmeraums auch durchgehend bzw. unterbrechungsfrei zwischen beiden Anschlussstellen. Es kann jedoch, z.B. bei Verwendung von Trennstegen zur Innenaufteilung, auch vorgesehen werden, dass das Funktionsmaterial mit Unterbrechungen abschnittsweise in Längsrichtung verteilt vorgesehen ist, z.B. als bandartige einzelne Streifen.

Es kann z.B. genau ein Funktionseinsatz, eine Funktionseinlage, eine Funktionsschicht usw. mit Funktionsmaterial auf Höhe der neutralen Faser in der Umhüllung vorgesehen sein oder aber z.B. zwei Funktionseinsätze, Funktionseinlagen, usw. die in der Umhüllung so vorgesehen sind, dass diese sich bzgl. der neutralen Faser gegenüberliegen.

Bevorzugt bildet das Funktionsmaterial mindestens eine Funktionsoberfläche, welche dem Innenraum und/oder zu führenden Leitungen zugewandt ist, und z.B. partikelhaltend bzw. haftend und/oder reibwertmindernd wirkt.

Zur Erleichterung von Wartungsarbeiten ist das Funktionsmaterial von der Innenseite der Umhüllung und/oder von den zu führenden Leitungen lösbar ausgeführt, insbesondere leicht von Hand bzw. werkzeugfrei lösbar.

Bevorzugt wird das Funktionsmaterial in einer wiederverwendbaren Bauform, z.B. mit lösbarem Einsatz, Einlage usw. vorgesehen.

Hinsichtlich der wiederverschließbaren Verbindung bzw. eines entsprechenden Verschlusses hat der Verbindungsbereich bevorzugt zwei in Längsrichtung durchgehende Verschlussleisten mit ineinandergreifenden Profilen. Diese können in Art eines Druckverschlusses, Schiebeverschlusses oder dgl. zusammenwirken und ein Öffnen der Umhüllung über deren Gesamtlänge ermöglichen, wobei die Verschlussleisten vorzugsweise im Wesentlichen auf Höhe der neutralen Faser angeordnet sind.

In einer bevorzugten Ausführungsform wird eine Leitungsführung nach dem Prinzip aus Abbildung 3A-3D bzw. 12-16 aus WO 2016/042134 A1 erfindungsgemäß mit Funktionsmaterial aus- bzw. nachgerüstet, z.B. in einer der vorstehenden Ausführungsformen. Dabei hat ist die Umhüllung abschnittsweise jeweils aus zwei gegenüberliegenden Schalenteilen aus Kunststoff, insbesondere aus zwei Schalenteilen mit unterschiedlichen Wellprofilen, lösbar zusammengesetzt. Die in Längsrichtung verbundenen Schalenabschnitte grenzen hierbei einen zusammenhängenden Innenraum ab, in welchem das Funktionsmaterial vorgesehen ist.

Weitere Merkmale und Vorteile der Erfindung sind ohne Beschränkung des Schutzumfangs der nachfolgenden Beschreibung einiger bevorzugter Ausführungsbeispiele anhand der beiliegenden Figuren zu entnehmen. Hierbei zeigen:
**FIG.1****:** einen schematischen Querschnitt durch eine Leitungsführungseinrichtung gemäß einem ersten Ausführungsbeispiel;
**FIG.2****:** einen schematischen Querschnitt durch eine Leitungsführungseinrichtung gemäß einem zweiten Ausführungsbeispiel;
**FIG.3****:** einen schematischen Querschnitt durch eine Leitungsführungseinrichtung gemäß einem dritten Ausführungsbeispiel;
**FIG.4****:** einen schematischen Querschnitt durch eine Leitungsführungseinrichtung gemäß einem vierten Ausführungsbeispiel; und
**FIG.5A, FIG.5B****:** schematische Längsschnitte zur Veranschaulichung der Anordnung eines Funktionsmaterials in Bezug auf die Längsrichtung der Leitungsführungseinrichtung.

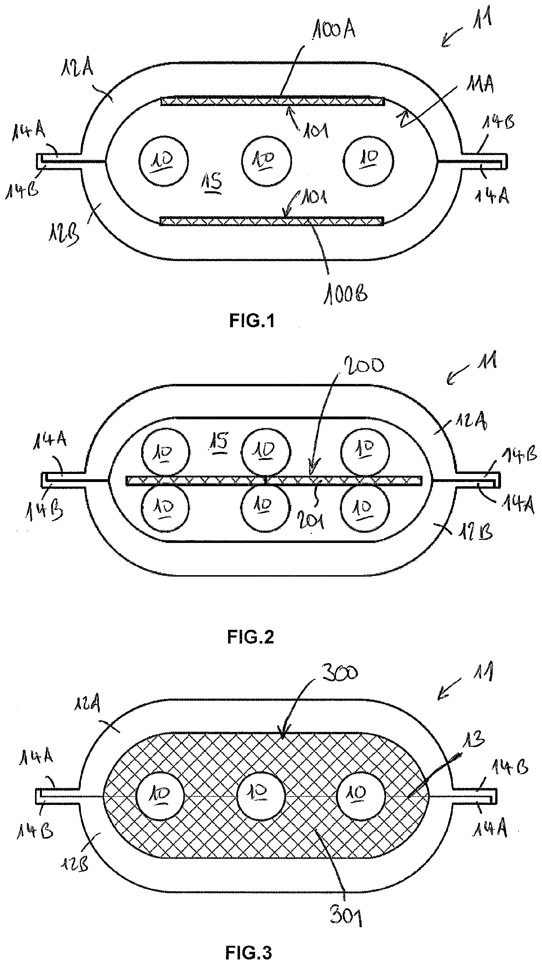

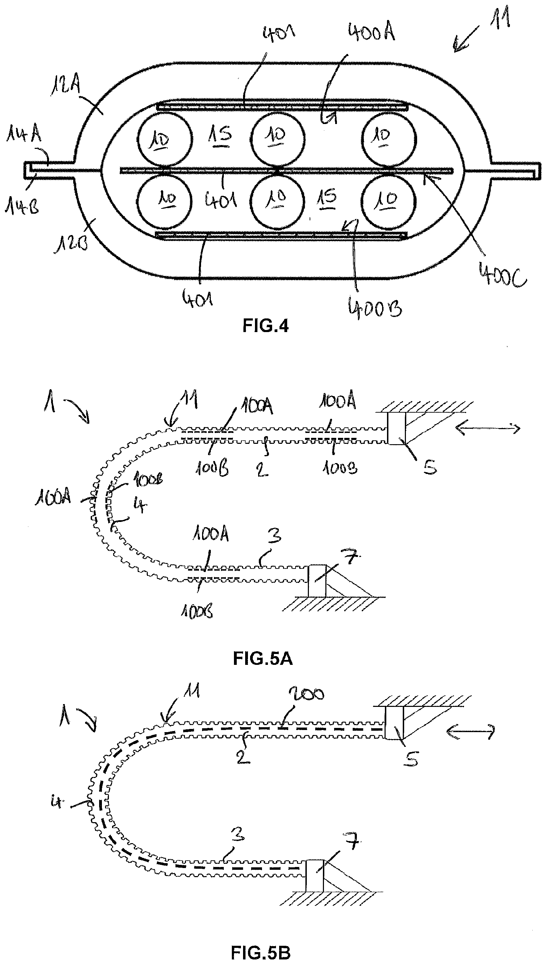

FIG.1-4 und FIG.5A-5B zeigen schematisch eine Leitungsführungseinrichtung 1 (FIG.5A-5B). Diese dient zum geschützten Führen von Kabeln, Schläuchen oder ähnlichen Leitungen, allgemein mit 10 bezeichnet (vgl. FIG.1-4). Zwischen einem Obertrum 2 und einem Untertrum 3 bildet die Leitungsführungseinrichtung 1 variabel bzw. dynamisch einen Umlenkbogen 4 mit vorgegebener Krümmung um eine Umlenkachse. Der Umlenkbogen 4 hat zur Vermeidung von Leitungsbrüchen insbesondere einen vorgegebenen, minimalen Krümmungsradius und gewährleistet so, dass zulässige Krümmungsradien der geführten Leitungen 10 nicht unterschritten werden. Der Umlenkbogen 4 fährt über eine Strecke relativ zum feststehenden Anschluss 5 zusammen mit dem hier z.B. linear beweglichen Anschluss 7, hier z.B. in einer vertikalen Ebene. Im gezeigten Beispiel liegt der bewegliche Anschluss 5 beispielhaft am Obertrum 2 und der feststehende Anschluss 7 am Untertrum 3. Das Obertrum 2 ist vorzugsweise freitragend d.h. weist eine freitragende Länge auf.

Die Leitungsführungseinrichtung 1 hat eine Umhüllung 11, die in der Art eines Wellschlauchs ausgeführt ist und ein Wellprofil aufweist, welches einerseits der Biegsamkeit dient und andererseits den Radius des Umlenkbogens 4 vorgibt. Die Umhüllung 11 als solche ist gemäß
WO 2016/042134 A1, nämlich den dortigen Abbildungen FIG.12-16, ausgeführt, d.h. abschnittsweise aus zwei miteinander verbundenen Schalenteilen 12A, 12B zusammengesetzt.

Die Schalenteilen 12A, 12B bestehen aus einem elastischen und dauerbiegefesten Kunststoff, und sind vorzugsweise als Spritzgussteile aus Thermoplast, hergestellt.

Die Schalenteile haben beidseitig jeweils auf der neutralen Faser 13 (vgl. FIG.3) gegenüberliegende Verbindungsleisten 14A, 14B z.B. mit einer Verzahnung gemäß WO 2016/042134 A1. Die Verbindungsleisten 14A, 14B bilden beidseitig einen lösbaren und wiederverschließbaren Verbindungsbereich. Hierdurch kann die Umhüllung 11 über die gesamte Länge seitlich geöffnet werden zum Einfügen bzw. Herausnehmen von Leitungen. Die Verbindungsleisten 14A, 14B wirken als staubdichter Verschluss.

Im geschlossenen Zustand definiert bzw. begrenzt die Umhüllung 11 einen zusammenhängenden Innenraum 15 staubdicht in Längsrichtung und in Umfangsrichtung. Der Innenraum 15 dient zum Aufnehmen mehrerer Leitungen 10. Zu weiteren baulichen Einzelheiten der Umhüllung 11 wird die Lehre aus WO 2016/042134 A1 (dort insbesondere zu FIG.12-16) hier zur Verkürzung einbezogen.

Im Ausführungsbeispiel nach FIG.1 sind zum Reduzieren der Anzahl freier Partikel im Innenraum 15 abschnittsweise zwei gegenüberliegende bandartige Funktionseinlagen 100A, 100B vorgesehen, welche einen dünnen, flexiblen Träger (nicht gezeigt) mit einem Funktionsmaterial 101 an der zum Innenraum gewandten Oberfläche als Funktionsfläche auf. Das Funktionsmaterial 101 kann hier z.B. als geeigneter Haftklebstoff oder dgl. ausgeführt sein und weist eine Haftwirkung bzw. Tack bzgl. betriebsbedingt im Innenraum freigesetzter reinraumkritischer Partikel auf. Es ist davon auszugehen, dass sich freigesetzte Partikel quasi-chaotisch beim Verfahren der Leitungsführungseinrichtung 1 im Innenraum frei bewegen, sodass über einen ausreichend langen Zeitraum ein überwiegender Anteil der Partikel vom Funktionsmaterial 101 der Funktionseinlagen 100A, 100B "eingefangen" wird und an diesem haften bleibt. Somit können diese Partikel beim Öffnen nicht mehr austreten. Die Funktionseinlagen 100A, 100B können über einen überwiegenden Längenanteil der Leitungsführungseinrichtung 1, hier an der Innenwand der Umhüllung 11, vorgesehen werden, oder über einen geringeren Anteil in Längsrichtung verteilt, wie schematisch in FIG.5A veranschaulicht, sodass ein geringeres Zusatzgewicht resultiert und der Materialaufwand minimiert wird.

Bei der Variante nach FIG.2 ist als Funktionseinlage 200 ein Faservlies mit elektrostatischer bzgl. freier Staubpartikel anziehender Wirkung vorgesehen. Die Funktionseinlage 200 und/oder Haftwirkung vorgesehen ist. Als Funktionsmaterial 201 im Faservlies können hierbei z.B. geeignete Mikrofasern, z.B. aus Polyethylen und/oder aus Polyester, eingesetzt werden, vorzugsweise mit einer klebrigen Beschichtung z.B. aus einem Haftklebestoff oder dgl. Die Funktionseinlage 200 in FIG.2 ist mittig, insbesondere auf Höhe der neutralen Faser 13, angeordnet und kann sich z.B. gemäß FIG.5B über die Gesamtlänge der Leitungsführungseinrichtung 1 bzw. Umhüllung 11 durchgehend erstrecken. Ein weiterer Vorteil dieser Anordnung besteht darin, dass Reibung zwischen Leitungen 10 die - wie in FIG.2 - nicht auf Höhe der neutralen Faser 13 (Längsebene welche keine Längenveränderung im Umlenkbogen 4 erfährt) angeordnet sind vermieden werden kann und entsprechend Abrieb weiter verringert wird.

In der Ausführungsform nach FIG.3 ist eine Funktionsfüllung 300 aus einem Gel 301 als Funktionsmaterial vorgesehen. Ein bevorzugtes Gel 301 ist dauerhaft fließfähig sodass ein Einschnitt zum Austausch einer Leitung wieder verschließt. Zudem kann das Gel 301 mit Tack bzw. permanenter Klebrigkeit ausgeführt sein um Partikel festzuhalten. Als Gel kommt z.B. ein geeignetes Gel der Produktreihe Relicon^{®} der Fa. HellermannTyton GmbH (D-25436 Tornesch) in Betracht. Zusätzlich können durch das Gel 301 die Leitungen reibungsfrei auf Abstand gehalten werden. Alternativ kann zur Gewichtsreduzierung auch ein geschlossenporiger, permanent klebriger Schaum verwendet werden. Auch Mischungen mit einem Haftklebstoff kommen in Betracht um Adhäsiv-Wirkung bzw. Dauerklebrigkeit zu erzielen.

In einer weiteren Ausführungsform nach FIG.4 sind drei langestreckte Funktionseinlagen 400A, 400B, 400C in Form von Gleitfolien aus einem reibwertminderndem Tribopolymer 401 als Funktionsmaterial vorgesehen. Ein geeignetes Tribopolymer ist z.B. unter der Handelsbezeichnung iglidur^{®} Gleitfolie tribo-tape von der Fa. igus GmbH (D-51147 Köln) erhältlich. Gemäß FIG.4 können dabei jeweils zwischen der Innenwand 11A der Umhüllung 11 und geführten Leitungen 10 zwei derartige Funktionseinlagen 400A, 400B vorgesehen werden. Eine weitere Funktionseinlage 400C ist mittig, etwa auf der neutralen Faser 13 vorgesehen. Die Funktionseinlagen 400A, 400B, 400C aus Tribopolymer 401 wirken bekämpfend bzgl. einer Ursache dem betriebsbedingten Freisetzen von Partikeln im Innenraum entgegen nämlich indem Abrieb zwischen den Leitungen weitgehend vermieden wird. Entsprechend sind die Funktionseinlagen 400A, 400B, 400C vorzugsweise in Längsrichtung durchgehend vorgesehen (vgl. FIG.5B).

Ergänzend oder alternativ zu einer oder mehreren der Funktionseinlagen 400A, 400B, 400C kann bei einer Anordnung nach FIG.4, z.B. zur mittleren Funktionseinlage 400C ergänzend, entsprechend FIG.2 auch z.B. ein Faservlies 200 und/oder nach FIG.1 ein Haftklebstoff 101 eingesetzt werden.

### Bezugszeichenliste

1 Leitungsführungseinrichtung
2 Obertrum
3 Untertrum
4 Umlenkbogen
5, 7 Anschlussstelle
10 Leitungen (z.B. Versorgungskabel)
11 Umhüllung
11A Innenwand
12A, 12B Schalenteil (der Umhüllung)
13 neutrale Faser
14A, 14B Verbindungsleisten
15 Innenraum
100A, 100B; 200 Funktionseinlage
101; 201; 301; 401 Funktionsmaterial
300 Funktionsfüllung
400A-400C Funktionseinlage

## Patentansprüche

1. Leitungsführungseinrichtung (1) für Leitungen (10), wie z.B. Kabel, Schläuche oder dergleichen, in einer Reinraumanwendung, umfassend
eine längliche, flexible Umhüllung (11) die hin- und hergehend, insbesondere unter Bildung eines Umlenkbogens (4) zwischen zwei Trumen (2, 3), zwischen einer ersten Anschlussstelle (7) und einer dazu relativbeweglichen zweiten Anschlussstelle (5) verfahrbar ist;
wobei die Umhüllung (11) mindestens einen lösbaren und wiederverschließbaren Verbindungsbereich (14A, 14B) aufweist, zum Einfügen bzw. Herausnehmen einer Leitung (10) bei geöffnetem Verbindungsbereich; und wobei die Umhüllung im geschlossenen Zustand einen Innenraum (15) zum Aufnehmen einer oder mehrerer Leitung staubdicht umgibt; **dadurch gekennzeichnet, dass**
innerhalb der Umhüllung (11) ein Funktionsmaterial (101; 201; 301; 401) zum Reduzieren der Anzahl freier Partikel im Innenraum (15) vorgesehen ist, wobei das Funktionsmaterial betriebsbedingt im Innenraum freigesetzte Partikel festhält und/oder dem betriebsbedingten Freisetzen von Partikeln im Innenraum entgegenwirkt.

2. Leitungsführungseinrichtung nach Anspruch 1, **dadurch gekennzeichnet, dass** im Innenraum (15) ein Funktionseinsatz, eine Funktionseinlage (100A, 100B; 200; 400A-400C), eine Funktionsschicht oder eine Funktionsfüllung (300) vorgesehen ist welcher/welche das Funktionsmaterial umfasst oder aus diesem besteht.

3. Leitungsführungseinrichtung nach Anspruch 1, **dadurch gekennzeichnet, dass** an der Innenwand (11A) der Umhüllung (11) zumindest abschnittsweise eine Beschichtung aus dem Funktionsmaterial vorgesehen ist.

4. Leitungsführungseinrichtung nach Anspruch 2, **dadurch gekennzeichnet, dass** als Funktionseinlage eine Faserstruktur, insbesondere ein Faservlies (201), mit partikelanziehender Wirkung und/oder Haftwirkung vorgesehen ist, insbesondere mit elektrostatischer Wirkung.

5. Leitungsführungseinrichtung nach Anspruch 2, **dadurch gekennzeichnet, dass** als Funktionsmaterial, insbesondere als hochviskose Funktionsfüllung oder Funktionsschicht, ein Gel (301), ein geschlossenporiger Schaum und/oder ein Haftklebstoff, zumindest abschnittsweise in die Umhüllung eingebracht ist.

6. Leitungsführungseinrichtung nach Anspruch 5, **dadurch gekennzeichnet, dass** das Gel (301) bzw. der Schaum bzw. der Haftklebstoff Adhäsiv-Wirkung bzw. Dauerklebrigkeit aufweist.

7. Leitungsführungseinrichtung nach Anspruch 5, **dadurch gekennzeichnet, dass** eine Funktionsschicht mit partikelreduzierendem Funktionsmaterial lediglich bereichsweise, insbesondere an der Innenwand (11A) der Umhüllung angebracht ist.

8. Leitungsführungseinrichtung nach Anspruch 2, **dadurch gekennzeichnet, dass** als Funktionseinlage eine Gleitfolie (400A, 400B, 400C) aus einem reibwertminderndem Tribopolymer (401) vorgesehen ist.

9. Leitungsführungseinrichtung nach einem der vorstehenden Ansprüche, **dadurch gekennzeichnet, dass** mindestens ein langgestreckter bandartiger Funktionseinsatz (200; 400A-400C) bzw. mindestens eine langestreckte bandartige Funktionseinlage im Innenraum (15) angeordnet ist.

10. Leitungsführungseinrichtung nach einem der vorstehenden Ansprüche, **dadurch gekennzeichnet, dass** das Funktionsmaterial (201; 401) zumindest über einen überwiegenden Anteil der Länge der Umhüllung im Innenraum vorgesehen ist.

11. Leitungsführungseinrichtung nach einem der vorstehenden Ansprüche, **dadurch gekennzeichnet, dass** das Funktionsmaterial (101) mindestens eine Funktionsoberfläche bildet, welche dem Innenraum und/oder zu führenden Leitungen zugewandt ist.

12. Leitungsführungseinrichtung nach einem der vorstehenden Ansprüche, **dadurch gekennzeichnet, dass** das Funktionsmaterial (101; 401) von der Innenseite der Umhüllung und/oder von zu führenden Leitungen lösbar ausgeführt ist.

13. Leitungsführungseinrichtung nach einem der vorstehenden Ansprüche, **dadurch gekennzeichnet, dass** der Verbindungsbereich zwei in Längsrichtung durchgehende Verschlussleisten (14A, 14B) mit ineinandergreifenden Profilen aufweist.

14. Leitungsführungseinrichtung nach Anspruch 13, **dadurch gekennzeichnet, dass** die Umhüllung (11) abschnittsweise jeweils aus zwei gegenüberliegenden Schalenteilen (12A, 12B) aus Kunststoff, insbesondere aus zwei Schalenteilen mit unterschiedlichen Wellprofilen, lösbar zusammengesetzt ist, welche einen zusammenhängenden Innenraum (15) abgrenzen.

## Claims

1. A line guide device (1) for lines (10), such as for example cables, hoses or the like, in a clean room application, comprising
an elongate, flexible envelope (11) which is displaceable to-and-fro between a first connection point (7) and a second connection point (5) movable relative thereto, in particular forming a deflection arc (4) between two runs (2, 3),
the envelope (11) having at least one undoable and reclosable connection region (14A, 14B), for insertion or removal of a line (10) when the connection region is open; and the envelope, when closed, surrounding in dust-tight manner an inner space (15) for accommodating one or more lines, **characterized in that** within the envelope (11) a functional material (101; 201; 301; 401) is provided to reduce the number of free particles in the inner space (15), wherein the functional material retains operationally released particles in the inner space and/or counteracts the operational release of particles in the inner space.

2. The line guide device as claimed in claim 1, **characterized in that** a functional insert, a functional inlay (100A, 100B; 200; 400A-400C), a functional layer or a functional filling (300) which comprises the functional material or consists thereof is provided in the inner space (15).

3. The line guide device as claimed in claim 1, **characterized in that** a coating of the functional material is provided at least in places on the inner wall (11A) of the envelope (11).

4. The line guide device as claimed in claim 2, **characterized in that** a fibrous structure, in particular a nonwoven (201), with particle-attracting action and/or adhesive action, in particular with electrostatic action is provided as functional inlay.

5. The line guide device as claimed in claim 2, **characterized in that** a gel (301), a closed-cell foam and/or a pressure-sensitive adhesive is introduced into the envelope at least in places as the functional material, in particular as a high-viscosity functional filling or functional layer.

6. The line guide device as claimed in claim 5, **characterized in that** the gel (301) or the foam or the pressure-sensitive adhesive has an adhesive action or permanent tackiness.

7. The line guide device as claimed in claim 5, **characterized in that** a functional layer with particlereducing functional material is applied merely in places, in particular on the inner wall (11A) of the envelope.

8. The line guide device as claimed in claim 2, **characterized in that** a sliding film (400A, 400B, 400C) of a friction coefficient-reducing tribopolymer (401) is provided as functional inlay.

9. The line guide device as claimed in one of the preceding claims, **characterized in that** at least one elongate tape-like functional insert (200; 400A-400C) or at least one elongate tape-like functional inlay is arranged in the inner space (15).

10. The line guide device as claimed in one of the preceding claims, **characterized in that** the functional material (201; 401) is provided in the inner space at least over a great majority of the length of the envelope.

11. The line guide device as claimed in one of the preceding claims, **characterized in that** the functional material (101) forms at least one functional surface which faces the inner space and/or lines to be guided.

12. The line guide device as claimed in one of the preceding claims, **characterized in that** the functional material (101; 401) is embodied so as to be detachable from the inside of the envelope and/or from lines to be guided.

13. The line guide device as claimed in one of the preceding claims, **characterized in that** the connection region has two closure strips (14A, 14B) continuous in the lengthwise direction with meshing profiles.

14. The line guide device as claimed in claim 13, **characterized in that** the envelope (11) is undoably assembled in portions of in each case of two opposing shell parts (12A, 12B) of plastics material, in particular of two shell parts with different corrugated profiles, which delimit a continuous inner space (15).

## Revendications

1. Chaîne porte-câbles (1) pour des conduites (10), comme par exemple des câbles, des tuyaux ou similaires, dans une application en salle blanche, comprenant
une enveloppe allongée et flexible (11) qui peut être déplacée en va-et-vient, notamment en formant un arc de déviation (4) entre deux brins (2, 3), entre un premier point de raccordement (7) et un deuxième point de raccordement (5) mobile par rapport au premier; l'enveloppe (11) présentant au moins une zone de liaison (14A, 14B) détachable et refermable, pour l'insertion ou le retrait d'une conduite (10) lorsque la zone de liaison est ouverte; et l'enveloppe entourant, à l'état fermé, de manière étanche aux poussières, un espace intérieur (15) destiné à recevoir une ou plusieurs conduites;
**caractérisée en ce que**
un matériau fonctionnel (101; 201; 301; 401) est prévu à l'intérieur de l'enveloppe (11) pour réduire le nombre de particules libres dans l'espace intérieur (15), le matériau fonctionnel retenant les particules libérées dans l'espace intérieur en raison du fonctionnement et/ou s'opposant à la libération de particules dans l'espace intérieur en raison du fonctionnement.

2. Chaîne porte-câbles selon la revendication 1, **caractérisée en ce qu'**il est prévu(e) dans l'espace intérieur (15) un insert fonctionnel, une garniture fonctionnelle (100A, 100B; 200; 400A-400C), une couche fonctionnelle ou un remplissage fonctionnel (300), qui comprend le matériau fonctionnel ou qui est constitué de celui-ci.

3. Chaîne porte-câbles selon la revendication 1, **caractérisée en ce qu'**un revêtement en matériau fonctionnel est prévu au moins par sections sur la paroi intérieure (11A) de l'enveloppe (11).

4. Chaîne porte-câbles selon la revendication 2, **caractérisée en ce qu'**il est prévu comme garniture fonctionnelle une structure fibreuse, en particulier un non-tissé (201), ayant un effet d'attraction des particules et/ou un effet d'adhérence, en particulier un effet électrostatique.

5. Chaîne porte-câbles selon la revendication 2, **caractérisée en ce qu'**un gel (301), une mousse à pores fermés et/ou un adhésif sensible à la pression, est introduit au moins par sections dans l'enveloppe en tant que matériau fonctionnel, en particulier en tant que remplissage fonctionnel ou couche fonctionnelle à haute viscosité.

6. Chaîne porte-câbles selon la revendication 5, **caractérisée en ce que** le gel (301) ou la mousse ou la colle de contact présente un effet adhésif ou une adhésivité permanente.

7. Chaîne porte-câbles selon la revendication 5, **caractérisée en ce qu'**une couche fonctionnelle avec un matériau fonctionnel réduisant les particules est appliquée uniquement par zones, en particulier sur la paroi intérieure (11A) de l'enveloppe.

8. Chaîne porte-câbles selon la revendication 2, **caractérisée en ce qu'**il est prévu comme insert fonctionnel une feuille de glissement (400A, 400B, 400C) en un tribolymère (401) réduisant le coefficient de frottement.

9. Chaîne porte-câbles selon l'une quelconque des revendications précédentes, **caractérisée en ce qu'**au moins un insert de fonction en forme de bande allongée (200; 400A-400C) ou au moins un insert fonctionnel en forme de bande allongée est disposé dans l'espace intérieur (15).

10. Chaîne porte-câbles selon l'une quelconque des revendications précédentes, **caractérisée en ce que** le matériau fonctionnel (201; 401) est prévu dans l'espace intérieur au moins sur une partie prépondérante de la longueur de l'enveloppe.

11. Chaîne porte-câbles selon l'une quelconque des revendications précédentes, **caractérisée en ce que** le matériau fonctionnel (101) forme au moins une surface fonctionnelle qui est tournée vers l'espace intérieur et/ou les conduites à guider.

12. Chaîne porte-câbles selon l'une quelconque des èrevendications précédentes, **caractérisée en ce que** le matériau fonctionnel (101; 401) est réalisé de manière à pouvoir être détaché de la face intérieure de l'enveloppe et/ou des conduites à conduire.

13. Chaîne porte-câbles selon l'une quelconque des revendications précédentes, **caractérisée en ce que** la zone de raccordement présente deux baguettes de fermeture (14A, 14B) continues dans le sens longitudinal avec des profils s'emboîtant l'un dans l'autre.

14. Chaîne porte-câbles selon la revendication 13, **caractérisée en ce que** l'enveloppe (11) est composée de manière amovible, par sections, respectivement de deux parties de coque (12A, 12B) opposée en matière plastique, en particulier de deux parties de coque avec des profils ondulés différents, qui délimitent un espace intérieur (15) d'un seul tenant.
